(19) Europäisches Patentamt
European Patent Office
Office européen des brevets

(11) **EP 3 584 268 B1**

(12) # EUROPEAN PATENT SPECIFICATION

(45) Date of publication and mention of the grant of the patent:
**27.01.2021 Bulletin 2021/04**

(21) Application number: **18781921.4**

(22) Date of filing: **31.01.2018**

(51) Int Cl.:
***C08G 69/14*** (2006.01) ***C08G 69/18*** (2006.01)
***C08G 69/24*** (2006.01)

(86) International application number:
**PCT/JP2018/003247**

(87) International publication number:
**WO 2018/186015 (11.10.2018 Gazette 2018/41)**

(54) **POLYAMIDE COMPOSITION AND METHOD FOR PRODUCING POLYAMIDE COMPOSITION**

POLYAMIDZUSAMMENSETZUNG UND VERFAHREN ZUR HERSTELLUNG EINER POLYAMIDZUSAMMENSETZUNG

COMPOSITION DE POLYAMIDE ET PROCÉDÉ DE PRODUCTION DE COMPOSITION DE POLYAMIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.04.2017 JP 2017075487**

(43) Date of publication of application:
**25.12.2019 Bulletin 2019/52**

(73) Proprietor: **Kureha Corporation**
**Chuo-ku**
**Tokyo 103-8552 (JP)**

(72) Inventors:
- **XIAO, Yingge**
**Tokyo 103-8552 (JP)**
- **YAMANE, Kazuyuki**
**Tokyo 103-8552 (JP)**
- **MURANO, Daisuke**
**Tokyo 103-8552 (JP)**
- **SUZUKI, Yoshinori**
**Tokyo 103-8552 (JP)**

(74) Representative: **BRP Renaud & Partner mbB**
**Rechtsanwälte Patentanwälte**
**Steuerberater**
**Königstraße 28**
**70173 Stuttgart (DE)**

(56) References cited:
**JP-A- 2016 030 771**
**JP-A- 2016 132 768**
**JP-A- 2016 186 068**
**JP-A- 2016 509 117**
**SE-B- 386 194**
**US-A1- 2016 297 930**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 584 268 B1

## Description

### Technical Field

The present invention relates to a method for producing a polyamide composition.

### Background Art

Polyamide is used not only in the fields of cosmetics and industrial products, but also in a wide range of fields, and various polyamides have been developed. Some polyamides including polyamide 4 are known as biodegradable plastics. Among these, polyamide 4 is expected to be used in multiple applications due to its high hygroscopicity.

However, polyamide 4 has problems with physical properties such as thermal stability. In order to improve these physical properties, the increase of molecular weight of polyamide is required, and various polyamides and methods for producing the same have been developed.

For example, as a high molecular weight polyamide and a method for producing the same, Patent Document 1 discloses a 2-pyrrolidone polymer including a structure derived from a carboxylic acid compound and a method for producing the same, including polymerizing 2-pyrrolidone using a basic polymerization catalyst and a carboxylic acid compound.

In addition, Patent Document 2 discloses a method for producing a polyamide 4 derivative having a branched structure by polymerizing 2-pyrrolidone and a polycarboxylic acid derivative as a polymerization initiator in the presence of a basic polymerization catalyst.

Patent Document 3 discloses a method for obtaining a polyamide 4 copolymer including a structure derived from an initiator as a polyamide having improved mechanical properties and thermal properties, the method including copolymerizing 2-pyrrolidone with ε-caprolactam using a basic polymerization catalyst and an initiator having a branched structure with two or more branches.

Additionally, Patent Document 4 discloses a method for producing a polyamide 4 composition having a weight average molecular weight of 300000 or more and a residual monomer content of 5000 ppm by mass or less by ring-opening polymerization of 2-pyrrolidone in the presence of a carbonate.

### Citation List

### Patent Document

Patent Document 1: JP 2002-265596 A
Patent Document 2: JP 2003-238679 A
Patent Document 3: JP 2009-155608 A
Patent Document 4: JP 2016-132768 A

### Summary of Invention

### Technical Problem

However, according to the technology described in Patent Document 1, the high molecular weight of polyamide 4 may be insufficient in the case where, for example, it is used as a biodegradable suture for medical use. According to the technology described in Patent Document 2, the molecular weight of each moiety of the polyamide 4 constituting the branched structure is still not high. According to the technology described in Patent Document 3, the polyamide has a branched structure, and thus its processability and mechanical properties are not sufficient for the use as a string. In addition, according to the polymerization method described in Patent Document 4, 1000 ppm or greater of residual monomer remains. Therefore, in order to further reduce the amount of the residual monomer, after completion of polymerization, a step of removing the monomer by, for example, monomer extraction, reprecipitation purification, or deaeration is required, which results in much time and labor taken for manufacture.

Therefore, the present invention has been accomplished in view of the problems described above, and is intended to provide a method for the production of a polyamide composition including a linear high molecular weight polyamide having no branched structure, the polyamide composition having a low residual monomer content.

Solution to Problem

In order to solve the problems described above, the polyamide composition produced according to the present invention includes a polyamide having a site formed of repeating structural units having at least one alkylene group and at least one amide bond, each of the at least one alkylene group has a carbon number of 1 to 3, the polyamide having a linear structure with a weight average molecular weight of 200000 or greater, and the content of the included raw material monomer, which is a raw material of the structural unit, being less than 1000 ppm by mass.

Advantageous Effects of Invention

According to the present invention, a method for the production of polyamide composition including a high molecular weight polyamide and having a low content of the residual raw material monomer is provided.

Brief Description of the Drawings

FIG. 1 is a graph illustrating a calibration curve.

Description of Embodiments

An embodiment of the polyamide composition produced according to the present invention is described hereinafter.

The polyamide composition produced according to the present embodiment includes a polyamide having a site repeating a structure unit having at least one alkylene group and at least one amide bond, each of the at least one alkylene group has a carbon number of 1 to 3, the polyamide having a linear structure with a weight average molecular weight of 200000 or more, and the content of the included raw material monomer, which is the raw material of the structural unit, being less than 1000 ppm by mass.

Polyamide

The polyamide included in the polyamide composition produced according to the present embodiment is a polyamide having a linear structure including one or more repeating structural sites formed of repeating structural units, and a structural site derived from an initiator.

Repeating structural site

The structural unit forming the repeating structural site is a structural unit having at least one alkylene group and at least one amide bond, and each of the at least one alkylene group is an alkylene group having a carbon number of 1 to 3.

The above-mentioned structural unit is not particularly limited as long as the structural unit has at least one alkylene group and at least one amide bond, but the structural unit preferably has one or two alkylene groups. The structural unit also preferably has one or two amide bonds.

The number of the repeating structural units may be appropriately determined according to the weight average molecular weight of the repeating structural site of polyamide. The weight average molecular weight of the repeating structural site of polyamide is described below.

The alkylene groups contained in the structural unit are not particularly limited provided that the number of carbon atoms is from 1 to 3, but the number of carbon atoms is more preferably 2 or 3, and particularly preferably 3. In addition, the alkylene group may be linear or branched.

An example of an aspect of the structural unit according to the present embodiment is a structural unit represented by Formula (1) below.

[Chemical Formula 1]

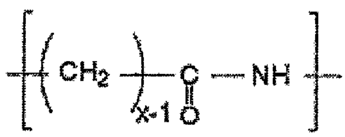

· · · Formula (1)

In Formula (1), x is 2, 3 or 4.

In the present specification, a polyamide having structural units represented by Formula (1) may be referred to as a "polyamide x" according to the number used for x in Formula (1). Thus, for example, a polyamide for which x in Formula (1) is 4 is referred to as "polyamide 4".

The weight average molecular weight (Mw) of the whole repeating structural unit of the polyamide produced according to the present embodiment is 200000 or greater. The weight average molecular weight of the whole repeating structural site means, when a plurality of repeating structural sites are included, the total weight average molecular weight of these repeating structural sites. Therefore, in a case where a plurality of repeating structural sites are included, when the total weight average molecular weight of the repeating structural sites is 200000 or more, a repeated structural site having a weight average molecular weight of less than 200000 may be included. The weight average molecular weight of the whole repeating structural site is not particularly limited as long as it is 200000 or more, but is preferably 250000 or more, and more preferably 300000 or more. The molecular weight of the repeating structural site of the polyamide in the present embodiment means the molecular weight in terms of methyl polymethacrylate (PMMA) measured by gel permeation chromatography (GPC).

Polyamide

The polyamide used according to the present embodiment has a structure in which one or more repeating structural sites are bonded to a structural site derived from an initiator. When a plurality of repeating structural sites are included, each of the plurality of repeating structural sites is connected via a structural site derived from an initiator. Therefore, because the number of repeating structural sites is 1 or 2, the polyamide is a linear polyamide. In the present specification, the term "linear" means that one or two polyamide chains are bonded to a structural site derived from an initiator. Therefore, the structure of the whole polyamide is a linear structure even it is bent at the point of the structural site derived from an initiator.

Polyamide composition

The content of the polyamide in the polyamide composition is not particularly limited, but is preferably 50% by mass or greater, more preferably 80% by mass or greater, and even more preferably 95% by mass or greater.

The content of the raw material monomer used in the production of the polyamide that is included in the polyamide composition is not particularly limited as long as it is less than 1000 ppm by mass, but is preferably 500 ppm by mass or less, and more preferably 100 ppm by mass or less. The content of the raw material monomer included in the polyamide composition can be determined by gas chromatography (GC). In addition, in a case where the content is lower than the detection limit of GC analysis, the raw material monomer at a specific concentration is subjected to GC, and a calibration curve is created based on the GC results. Then, the detection limit (XDL) is calculated using the obtained calibration curve, and the maximum content of the raw material monomer that can be included is estimated from the assay of this detection limit.

The content of the raw material monomer, which is used to produce polyamide, included in the polyamide composition according to the present embodiment is less than 1000 ppm by mass as described above. Additionally, the polyamide in the polyamide composition is polymerized. Therefore, the polyamide composition according to the present embodiment is suitable for the use in a wide range of fields such as cosmetic and industrial product fields. It is particularly suitable for the use in the cosmetic and industrial product fields because the amount of the residual raw material monomer is very small.

Method for producing polyamide composition

The method according to the present embodiment for producing the polyamide composition will be described below. The polyamide composition is produced through a polymerization step in which the raw material monomer to be the above-described structural unit is polymerized in the presence of a basic catalyst and an initiator. The polymerization reaction can be terminated by adding a polymerization terminator.

Raw material monomer

The raw material monomer according to the present embodiment is not particularly limited as long as it is a polymerizable compound that includes at least one alkylene group and at least one amide bond, each of the at least one alkylene group having a carbon number of 1 to 3. The raw material monomer is not particularly limited as long as it has at least one alkylene group, but preferably has one or two alkylene groups. The raw material monomer is not particularly limited as long as it has at least one alkylene group, but preferably has one or two amide bonds.

Examples of an aspect of the raw material monomer include a compound capable of forming a structural unit represented by Formula (1) above through, for example, polymerization. Examples of such compounds include caprolactam, 2-pyrrolyl pyrrolidone, γ-aminobutanoic acid, ω-aminohexanoic acid, ε-aminopentanoic acid, and 2-pyrrolidone. Among these, 2-pyrrolidone is preferable. The raw material monomer may be used alone, or two or more types thereof may be used in combination.

Basic catalyst

The basic catalyst according to the present embodiment is not particularly limited as long as it can generate an anionic species in the raw material monomer. Examples of the basic catalysts include those used as polymerization catalysts for anionic polymerization, such as alkali metals and alkaline earth metals, and their hydrides, oxides, hydroxides, carbonates, carboxylates, alkylates, and alkoxides. Examples of the alkali metal include lithium, sodium, potassium, rubidium, and cesium. Among these, alkali metals and their hydrides are preferable, and alkali metals are more preferable. The basic catalyst may be used alone, or two or more types thereof may be used in combination.

The usage of the basic polymerization catalyst is not particularly limited, but is from 0.1 to 4 mol%, preferably from 1 to 4 mol%, and more preferably from 2 to 4 mol% with reference to the total amount of the raw material monomer supplied. These ranges are preferable for achieving a high yield of the polyamide to be obtained.

Initiator

The initiator according to the present embodiment is not particularly limited as long as it is a compound that is commonly used in polymerization reaction of polyamide, and has one or two acyl structures. In the present specification, the compound having two acyl structures is intended to include those having a structure of X-CO-R-CO-X (wherein R is a hydrocarbon group and X is other than a hydrocarbon group). Preferable examples of the compound having an acyl structure include the acylated product of the raw material monomer.

Examples of the compound having an acyl structure include imide compounds; carboxylic acid derivatives such as carboxylic acid halides and carboxylic acid esters; and amide compounds. Among these initiators, imide compounds are preferable, and N,N'-adipoyl dipyrrolidone, terephthaloyl dipyrrolidone, and acetyl pyrrolidone are more preferable.

The usage of the initiator is not particularly limited, but is more preferably from 0.3 to 2 mol%, and even more preferably from 0.5 to 1 mol% with reference to the total amount of raw material monomer supplied. In addition, the usage is preferably from 0.1 to 5 mol%, more preferably from 0.3 to 2 mol%, and even more preferably from 0.5 to 1 mol% with reference to the initial supply amount of the raw material monomer.

In the present embodiment, water is used as a polymerization terminator. Therefore, in a case where water is included in the reaction system, the polymerization reaction may be inhibited. Therefore, in order to efficiently proceed the polymerization reaction, the water content in the reaction system, that is, the sum of the water content contained in the raw material monomer, basic catalyst, initiator, and the like is preferably 700 ppm by mass or less, more preferably 400 ppm by mass or less, and particularly preferably 100 ppm by mass or less.

Polymerization terminator

The polymerization terminator according to the present embodiment is not limited as long as it includes water. For example, water, a saline solution, or a polymerization terminator containing water commonly used as a polymerization terminator for ion polymerization reaction can be used. Examples of the polymerization terminators commonly used as polymerization terminators for ion polymerization reactions include benzoic acid, hydrochloric acid, phosphoric acid, metaphosphoric acid, acetic acid, lactic acid, glycolic acid, and alcohols such as methanol, ethanol, propyl alcohol, hexafluoropropyl alcohol, and butyl alcohol.

The usage of the polymerization terminator is not particularly limited, but is preferably from 50 to 1000 parts by weight, and more preferably from 100 to 400 parts by weight with reference to 100 parts by weight of the polyamide polymerization reaction product.

Additive

Additives may be added as necessary in the polymerization reaction. Examples of the additives include surfactants, antioxidants, stabilizers, dyes, and pigments. They may be used in combination of two or more types of them. The usage of the additive may be adjusted within a range that does not impair the object and effect of the present invention.

Polymerization step

The polymerization step according to the present embodiment may be performed, for example, as follows. Firstly, a basic catalyst is added to the raw material monomer, thereby generating an anionic species in a portion of the raw material monomer. Then, an initiator is added to cause polymerization reaction, thereby initiating the polymerization step.

In the present embodiment, the raw material monomer is added by batchwise addition rather than adding all at once. That is, the raw material monomer is supplied to the reaction system in multiple portions. There is no limitation on the number of times of supply of the raw material monomer as long as it is added in divided portions, and is preferably two or more and eight or less, more preferably two or more and five or less, and even more preferably two. A high molecular weight polyamide is obtained by supplying the raw material monomer in multiple portions.

The timing of additional supply of the raw material monomer is preferably between the time when the reaction becomes cloudy and then solidified and precipitated.

The initial supply amount (charged amount A) of the raw material monomer and the supply amount B at each of the additional supplies are preferably A > B.

For example, in the polymerization step in which the raw material monomer is supplied in two portions, that is, one additional supply is performed, before and after the additional supply of the raw material monomer is regarded as the first and second polymerization reaction stages, respectively. When the amount of the raw material monomer present in the first polymerization reaction stage is 100 mol%, the amount of the raw material monomer in the first polymerization reaction stage is preferably adjusted such that the amount of the initiator present in the first polymerization reaction stage is from 0.1 to 5 mol%, more preferably from 0.3 to 2 mol%, and even more preferably from 0.5 to 1 mol%. When the total supply amount of the raw material monomer after the addition of the raw material monomer is 100 mol%, the additional supply of the raw material monomer is preferably performed in such a manner that the amount of the initiator present in the second polymerization reaction stage is from 0.1 to 5 mol%, and more preferably from 0.3 to 2 mol%, and even more preferably from 0.5 to 1 mol%. The amount of the initiator present in the second polymerization reaction stage does not refer to the amount of the initiator remaining unreacted at the beginning of the second polymerization reaction stage, and means the total amount of the initiator supplied to the reaction system.

The reaction temperature in the polymerization step may be, for example, from 15 to 100°C, preferably from 20 to 80°C, and more preferably from 25 to 50°C. The reaction time in the polymerization step may be, for example, from 1 hour to 1 year, preferably from 3 hours to 1 week, and more preferably from 6 hours to 24 hours.

The polymerization reaction in the polymerization step is stopped by adding a polymerization terminator containing water in the reaction system. The timing of addition of the polymerization terminator is not particularly limited. Furthermore, water may be further added after termination of the polymerization reaction. The temperature of water added as a polymerization terminator is preferably from 20 to 100°C, more preferably from 60 to 95°C, and even more preferably 90°C. In addition, when the system is allowed to stand for a certain time after the addition of water, it is preferably retained at a temperature within these ranges. The retention time may, for example, from 5 minutes to 24 hours.

Because the polymerization reaction is terminated with a polymerization terminator containing water, the amount of the residual raw material monomer in the obtained polyamide composition can be reduced simply by filtration. That is, the amount of the residual raw material monomer in the polyamide composition can be easily and safely set to less than 1000 ppm by mass.

According to the production method of the present embodiment, the polyamide composition described above can be prepared.

Summary

The polyamide composition produced according to an embodiment of the present invention includes a polyamide having a site formed of repeating structural units having at least one alkylene group and at least one amide bond, each of the at least one alkylene group having a carbon number of 1 to 3, the polyamide having a linear structure with a weight average molecular weight of 200000 or greater, and the content of the included raw material monomer, which is a raw material of the structural unit, being less than 1000 ppm by mass.

Additionally, in the polyamide composition produced according to an embodiment of the present invention, the structural unit is preferably represented by Formula (1).

[Chemical Formula 2]

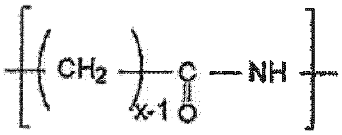 · · · Formula (1)

(wherein x is an integer from 2 to 4.)

The method according to an embodiment of the present invention for producing a polyamide composition includes a polymerization step of polymerizing a raw material monomer, which is a raw material of the structural unit, in the presence of a basic catalyst and an initiator having two or less acyl structures, wherein in the polymerization step, the raw material monomer is supplied in multiple portions, and the polymerization step is terminated by addition of a polymerization initiator containing water.

Furthermore, in the method according to an embodiment of the present invention for producing a polyamide composition, the initiator is preferably an imide compound.

In addition, in the method according to an embodiment of the present invention for producing the polyamide composition, the raw material monomer is supplied in two portions in the polymerization step, the polymerization step includes a first polymerization reaction before additional supply of the raw material monomer and a second polymerization reaction after additional supply of the raw material monomer, wherein the amount of the initiator present in the first polymerization reaction is preferably from 0.3 to 2 mol% when the amount of the raw material monomer present is 100 mol%, and the amount of the initiator present in the second polymerization reaction is preferably from 0.1 to 1.5 mol% when the total amount of the raw material monomer after additional supply of the raw material monomer is 100 mol%,.

Embodiments of the present invention will be described in further detail hereinafter using examples. The present invention is not limited to the examples below, and it goes without saying that various aspects are possible with regard to the details thereof. Furthermore, the present invention is not limited to the embodiments described above, and various modifications are possible within the scope indicated in the claims. Embodiments obtained by appropriately combining the technical means disclosed by the embodiments are also included in the technical scope of the present invention.

## Examples

### Example 1

First polymerization reaction: 102 g (1.2 mol) of 2-pyrrolidone (2PDN) (moisture content: 22 ppm) as a raw material monomer was charged into a sealed flask equipped with stirring blades in a water bath at a temperature of 50°C, and 0.69 g (0.03 mol) of metal sodium (Na) as a basic catalyst was added thereto. After the sodium dissolved, 0.7 mol% of N, N'-adipyl-dipyrrolidone (A.P.) as an initiator was added to 2PDN. Then, the system immediately became clouded.

Second polymerization reaction: after the system became clouded, 40.8 g of 2PDN was additionally supplied to the system, and the reaction was continued for 24 hours.

The obtained polyamide composition was measured for its concentration (%) of the residual 2PDN according to the procedure described below.

#### Measurement of residual raw material monomer

#### Preparation of sample

200 g of water as a polymerization terminator was added to about 100 g of the polyamide composition obtained in the second polymerization, thereby terminating the polymerization reaction. The polyamide composition containing this water was then retained at 90°C for 2 hours, and then filtered. The residue obtained by filtration was then dried at 60°C for 24 hours using a vacuum dryer, thus producing a sample.

#### Analysis method

About 0.2 g of the prepared sample was dissolved in 10 ml of hexafluoroisopropanol (HFIP). Then, 40 ml of acetone was added to the solution, thereby precipitating a polymer. The amount of 2PDN in the polyamide composition was determined by gas chromatography (GC) analysis of the acetone solution after precipitation of the polymer. The

measurement conditions in the GC analysis are as follows.

Measurement conditions

Measurement device: GC-2010 Plus, available from Shimadzu Corporation
Column: Rxi-5 ms: 15 m, 0.25 mm ID: 0.25 μm
Column temperature: 50°C
Heating program: 50°C (5 min) → 20°C/min → 250°C (5 min)
FID temperature: 250°C
Carrier gas: He

Measurement result

The GC analysis detected no peak derived from 2PDN. Therefore, the detection limit was assayed as follows. When the concentrations of 2PDN was 100 ppm, 500 ppm, and 1000 ppm, GC analysis was performed to create a calibration curve as shown in FIG. 1. FIG. 1 shows a calibration curve representing the relationship between the concentration of 2PDN and GC analysis result. The equation for the calibration curve is as follows:

$$\text{Calibration curve: } y = 133.91x - 2464 \ (R^2 = 0.9999)$$

The detection limit ($X_{DL}$) was calculated from the obtained calibration curve. On the basis of the standard deviation of the inclination of the calibration curve and 95% confidence limit, $X_{DL}$ was 15.037. From the assay of this detection limit, the concentration of the residual 2PDN was found to be less than 15 ppm by mass.

Measurement of weight average molecular weight (Mw)

Analysis of Mw

- Measurement procedure:
  10 mg of the polyamide sample was dissolved in hexafluoroisopropanol (HFIP), in which sodium trifluoroacetate had been dissolved at a concentration of 5 mM, to prepare a solution of 10 $cm^3$ and then the solution was filtered using a membrane filter to obtain a sample solution. An amount of 10 μL of the sample solution was injected into the analysis device described below, and the weight average molecular weight Mw of the polyamide was measured under the measurement conditions described below.
- Analyzer: gel permeation chromatography (GPC) analysis device (GPC104, available from Showa Denko K.K.)
- Measurement Conditions:

  A) SHODEX 104 System
  B) Column: Showa Denko HFIP 606 × 2 in series, 40°C
  C) 5 mM $CF_3COONa$/HFIP, 0.1 mL/min
  D) Detector: RI
  E) 10 to 11 mg of sample/5 mM $CF_3COONa$/10 mL of HFIP
  F) Calibration (in terms of PMMA) using a PMMA standard substance (150 E4, 65.9 E4, 21.8 E4, 4.96 E4, 2.06 E4, 0.68 E4, 0.2 E4).

Measurement of conversion ratio

Analysis of conversion ratio

Before termination of polymerization, 0.2 g of the polyamide was dissolved in 10 ml of HFIP, and 40 ml of acetone was added to 10 ml of HFIP, thereby precipitating a polymer. The amount of 2-pyrrolidone was determined by GC analysis of the acetone solution after precipitation of the polymer.

Measurement device: "GC-2010 Plus" made by Shimadzu Corporation
Column: Rxi-5 ms: 15 m, 0.25 mm ID: 0.25 μm
Column temperature: 50°C
Heating program: 50°C (5 min) → 20°C/min → 250°C (5 min)
FID Temperature: 250°C
Carrier gas: He

The residual 2-pyrrolidone ratio was determined from the ratio of the weight of the residual monomer to the weight of the sampling monomer, and the conversion ratio was calculated as follows.

$$\text{Conversion ratio (\%)} = 100 - \{\text{residual 2-pyrrolidone ratio}\}\ (\%)$$

Measurement of moisture content in 2PDN

The moisture content in 2PDN was measured as follows. Analysis of moisture content in 2-pyrolidone

Using a Karl Fischer Moisture meter CA-100 made by Mitsubishi Chemical Corporation, the moisture content was measured under the following conditions.

A) anolyte: Aquamicon AX, cathode: Aquamicon CXU
B) Sample amount: 1 g
C) End point: 0.04 to 0.15 μg/sec

Example 2

In the first polymerization reaction, the loading of A.P. was changed to 0.5 mol % with reference to 2PDN (moisture content: 45 ppm). Additionally, in the second polymerization reaction, the amount of additional supply of 2PDN was changed to 40 g. A polyamide composition was obtained in the same manner as in Example 1, except for the changes described above. The amount of A.P. present to total amount of 2PDN after additional supply corresponds to 0.35 mol%. To about 100 g of the polyamide compositions obtained in the second polymerization reaction, 200 g of water as a polymerization terminator was added, thereby terminating the polymerization reaction. The polyamide composition containing this water was then retained at 90°C for 2 hours, and then filtered. The residue obtained by filtration was then dried at 60°C for 24 hours using a vacuum dryer to produce a sample. 2PDN in the sample was less than 15 ppm. The obtained polyamide composition was measured for its conversion ratio and Mw. These results are shown in Table 1.

Comparative Example 1

51 g (0.6 mol) of 2PDN (moisture content: 71 ppm) was charged into a sealed flask equipped with stirring blades in a water bath at a temperature of 50°C, and 2.5 mol% of Na was added to 2PDN. After Na dissolved, 0.7 mol % A.P. as an initiator was added to 2PDN, and polymerization was performed for 24 hours. The obtained polyamide composition was measured for its conversion ratio and Mw. These results are shown in Table 1.

Comparative Example 2

A polyamide composition was obtained in the same manner as in Comparative Example 1, except that the loading of A.P. to 2PDN was changed to 0.5 mol%. The obtained polyamide composition was measured for its conversion ratio and Mw. These results are shown in Table 1.

Comparative Example 3

A polyamide composition was obtained in the same manner as in Comparative Example 1, except that the loading of A.P. to 2PDN was changed to 0.35 mol%. The obtained polyamide composition was measured for its conversion ratio and Mw. These results are shown in Table 1. In Comparative Examples 1 to 3, the obtained polyamide had a low

molecular weight, so that the 2PDN amount in the sample obtained by filtration and drying after termination of polymerization was not measured.

[Table 1]

| | Conversion ratio (%) | Mw ($x10^4$) | 2PDN amount in polyamide composition |
|---|---|---|---|
| Example 1 | 81.0 | 31.1 | Less than 15 ppm |
| Example 2 | 42.2 | 26.2 | Less than 15 ppm |
| Comparative Example 1 | 83.1 | 18.2 | - |
| Comparative Example 2 | 66.7 | 17.7 | - |
| Comparative Example 3 | 55.1 | 10.6 | - |

Industrial Applicability

The polyamide composition of the present invention can be used in a wide range of fields such as cosmetic fields, medical fields, and industrial product fields.

## Claims

1. A method for producing a polyamide composition comprising a polyamide, the polyamide having a site formed of repeating structural units having at least one alkylene group and at least one amide bond,
each of the at least one alkylene group having a carbon number of 1 to 3, and the polyamide having a linear structure a weight average molecular weight of 200000 or greater,
the content of the included raw material monomer, which is a raw material of the structural unit, being less than 1000 ppm by mass,
the production method comprising a polymerization step wherein the raw material monomer, which is a raw material of the structural unit, being polymerized in the presence of a basic catalyst and an initiator having two or less acyl structures, the raw material monomer being supplied in multiple portions the polymerization step, and
the polymerization step being terminated by addition of a polymerization terminator containing water.

2. The method for producing a polyamide composition according to claim 1, wherein the initiator is an imide compound.

3. The method for producing a polyamide composition according to claim 1 or 2, wherein in the polymerization step, the raw material monomer is supplied in two portions,
the polymerization step comprises a first polymerization reaction before additional supply of the raw material monomer and a second polymerization reaction after additional supply of the raw material monomer,
the amount of the initiator present in the first polymerization reaction is from 0.3 to 2 mol% when the amount of the raw material monomer present is 100 mol%, and the amount of the initiator present in the second polymerization reaction is from 0.1 to 1.5 mol% when the total amount of the raw material monomer after additional supply of the raw material monomer is 100 mol%.

4. The method for producing a polyamide composition according to any one of claims 1 to 3, wherein the structural unit is represented by the Formula (1):

[Chemical Formula 1]

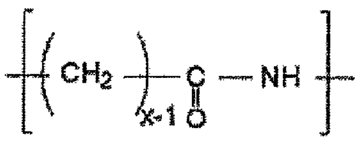

· · · Formula (1)

where x is an integer from 2 to 4.

## Patentansprüche

**1.** Verfahren zum Herstellen einer Polyamidzusammensetzung, die ein Polyamid umfasst,
wobei das Polyamid eine Stelle aufweist, die aus sich wiederholenden Struktureinheiten mit mindestens einer Alkylengruppe und mindestens einer Amidbindung gebildet ist,
wobei jede der mindestens einen Alkylengruppe eine Kohlenstoffzahl von 1 bis 3 und das Polyamid, das eine lineare Struktur aufweist, ein gewichtsmittleres Molekulargewicht von 200000 oder größer aufweist,
wobei der Gehalt des enthaltenen Ausgangsmaterialmonomers, das ein Ausgangsmaterial der Struktureinheit ist, weniger als 1000 Massen-ppm beträgt,
wobei das Herstellungsverfahren einen Polymerisationsschritt umfasst, wobei das Ausgangsmaterialmonomer, das ein Ausgangsmaterial der Struktureinheit ist, in Gegenwart eines basischen Katalysators und eines Initiators mit zwei oder weniger Acylstrukturen polymerisiert wird,
wobei das Ausgangsmaterialmonomer dem Polymerisationsschritt in mehreren Portionen zugeführt wird, und
wobei der Polymerisationsschritt durch Zugabe eines Wasser enthaltenden Polymerisationsabbrechers beendet wird.

**2.** Verfahren zum Herstellen einer Polyamidzusammensetzung nach Anspruch 1, wobei der Initiator eine Imidverbindung ist.

**3.** Verfahren zum Herstellen einer Polyamidzusammensetzung nach Anspruch 1 oder 2, wobei in dem Polymerisationsschritt das Ausgangsmaterialmonomer in zwei Portionen zugeführt wird,
der Polymerisationsschritt eine erste Polymerisationsreaktion vor zusätzlicher Zufuhr des Ausgangsmaterialmonomers und eine zweite Polymerisationsreaktion nach zusätzlicher Zufuhr des Ausgangsmaterialmonomers umfasst,
die Menge des in der ersten Polymerisationsreaktion vorhandenen Initiators von 0,3 bis 2 Mol-% beträgt, wenn die Menge des vorhandenen Ausgangsmaterialmonomers 100 Mol-% beträgt, und die Menge des in der zweiten Polymerisationsreaktion vorhandenen Initiators von 0,1 bis 1,5 Mol-% beträgt, wenn die Gesamtmenge des Ausgangsmaterialmonomers nach zusätzlicher Zufuhr des Ausgangsmaterialmonomers 100 Mol-% beträgt.

**4.** Verfahren zum Herstellen einer Polyamidzusammensetzung nach einem der Ansprüche 1 bis 3, wobei die Struktureinheit durch die Formel (1) dargestellt wird:

[Chemische Formel 1]

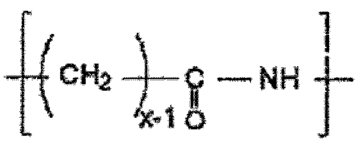

· · · Formel (1)

wobei x eine ganze Zahl von 2 bis 4 ist.

## Revendications

**1.** Procédé de production d'une composition de polyamide comprenant un polyamide,
le polyamide ayant un site formé de motifs structuraux de répétition ayant au moins un groupe alkylène et au moins une liaison amide,
chacun parmi l'au moins un groupe alkylène ayant un nombre de carbones de 1 à 3, et le polyamide ayant une structure linéaire une masse moléculaire moyenne en poids de 200 000 ou plus,
la teneur du monomère de matière première inclus, qui est une matière première du motif structural, étant inférieure à 1000 ppm en masse,
le procédé de production comprenant une étape de polymérisation dans laquelle le monomère de matière première, qui est une matière première du motif structural, est polymérisé en présence d'un catalyseur basique et d'un initiateur ayant deux structures acyle ou moins,
le monomère de matière première étant alimenté en de multiples parties l'étape de polymérisation, et
l'étape de polymérisation étant terminée par addition d'un terminateur de polymérisation contenant de l'eau.

2. Procédé de production d'une composition de polyamide selon la revendication 1, dans lequel l'initiateur est un composé imide.

3. Procédé de production d'une composition de polyamide selon la revendication 1 ou 2, dans lequel dans l'étape de polymérisation, le monomère de matière première est alimenté en deux parties,
l'étape de polymérisation comprend une première réaction de polymérisation avant alimentation supplémentaire du monomère de matière première et une deuxième réaction de polymérisation après alimentation supplémentaire du monomère de matière première,
la quantité de l'initiateur présent dans la première réaction de polymérisation va de 0,3 à 2 % molaires lorsque la quantité du monomère de matière première présent est de 100 % molaires, et la quantité de l'initiateur présent dans la deuxième réaction de polymérisation va de 0,1 à 1,5 % molaire lorsque la quantité totale du monomère de matière première après alimentation supplémentaire du monomère de matière première est de 100 % molaires.

4. Procédé de production d'une composition de polyamide selon l'une quelconque des revendications 1 à 3, dans lequel le motif structural est représenté par la Formule (1) :

[Formule chimique 1]

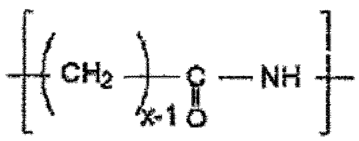

· · · Formule (1)

où x est un nombre entier allant de 2 à 4.

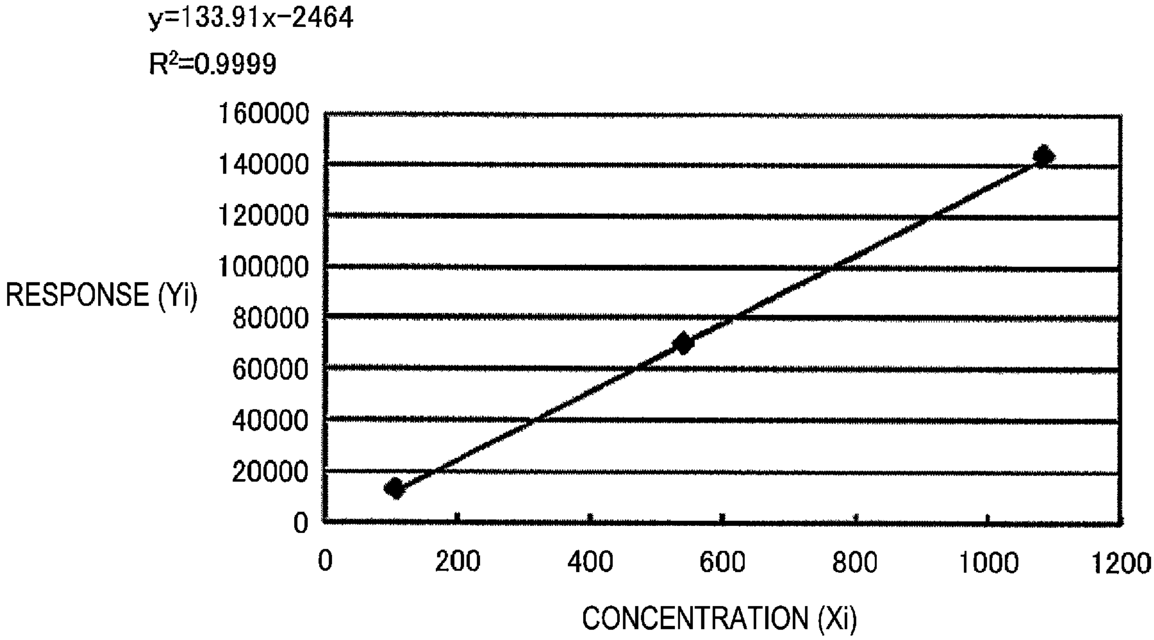
y=133.91x−2464
R²=0.9999
160000
140000
120000
100000
80000
60000
40000
20000
0
RESPONSE (Yi)
0
200
400
600
800
1000
1200
CONCENTRATION (Xi)

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002265596 A
- JP 2003238679 A
- JP 2009155608 A
- JP 2016132768 A